(19) Europäisches Patentamt
European Patent Office
Office européen des brevets

(11) **EP 0 776 466 B1**

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(21) Anmeldenummer: **95927649.4**

(22) Anmeldetag: **09.08.1995**

(51) Int Cl.6: **G01L 1/14**, G01B 7/16

(86) Internationale Anmeldenummer:
**PCT/DE95/01048**

(87) Internationale Veröffentlichungsnummer:
**WO 96/05491 (22.02.1996 Gazette 1996/09)**

(54) **KRAFT- ODER DEHNUNGSSENSOR**

FORCE OR EXTENSION SENSOR

CAPTEUR DE FORCE ET D'ALLONGEMENT

(84) Benannte Vertragsstaaten:
**AT BE CH DE ES FR GB IT LI NL SE**

(30) Priorität: **16.08.1994 DE 4429049**

(43) Veröffentlichungstag der Anmeldung:
**04.06.1997 Patentblatt 1997/23**

(73) Patentinhaber: **SIEMENS AKTIENGESELLSCHAFT**
**80333 München (DE)**

(72) Erfinder:
• **DOEMENS, Günter**
  **D-83607 Holzkirchen (DE)**
• **GILCH, Markus**
  **D-85419 Mauern (DE)**

(56) Entgegenhaltungen:
**EP-A- 0 354 386**       **DE-A- 2 715 831**

• **EXPERIMENTAL MECHANICS, Bd. 15, Nr. 8, August 1975 WESTPORT, USA, Seiten 316-322, O.LARRY GILLETTE 'MEASUREMENT OF STATIC STRAIN AT 2000 F'**

**Beschreibung**

Aus der EP-B-0 354 386, ist ein Meßaufnehmer für Längen- oder Abstandsänderungen mit mechanisch-elektrischer Meßgrößenumformung bekannt, bei dem als verstellbare Kapazität ein Meßkondensator mit zwei parallel zueinander verstellbaren Elektrodenstrukturen vorgesehen ist. Die kammförmig ausgebildeten und ineinandergreifenden Elektrodenstrukturen bestehen jeweils aus mehreren ebenen, parallel im Abstand zueinander angeordneten Elektroden, die paarweise einander zugeordnet sind. Durch eine stark unsymmetrische Anordnung der Elektrodenstrukturen wird eine kapazitive Entkopplung erreicht, so daß die Gesamtkapazität des Meßkondensators sich aus einer Parallelschaltung von Elektrodenpaaren ergibt, die jeweils durch einander zugeordnete Elektroden gebildet sind. Als Meßgröße dient die durch den variablen Elektrodenabstand der Elektrodenpaare hervorgerufene Kapazitätsänderung. Die Meßaufnehmer werden insbesondere bei der berührungslosen Messung von Drehmomenten an rotierenden Wellen eingesetzt. Mit als Mikrostrukturen ausgebildete Elektrodenstrukturen können beispielsweise Torsionen von wenigen Mikrometern erfaßt werden. Für eine generelle Messung einer linearen Kraft oder Dehnung sind die in der EP-B-0 354 386 beschriebenen Meßaufnehmer nur bedingt geeignet, da die temperaturbedingte Dehnung die Elektrodenabstände unmittelbar verändert und damit das Meßergebnis verfälscht.

Für statische oder dynamische Kraft- bzw. oder Dehnungsmessungen werden in der Regel Dehnungsmeßstreifen eingesetzt, die aus mehreren Schleifen von dünnem Widerstandsdraht bestehen, die in einen Träger aus Papier und Kunstharz eingebettet sind. Dieser Träger wird auf die Meßstelle geklebt und macht infolgedessen die Längenänderung des Meßobjekts an dieser Stelle mit. Die dabei eintretende Längung bzw. Verkürzung der Drahtschleifen ergibt eine Widerstandsänderung, die der Dehnung des Meßobjekts proportional ist. Neben Anwendungen, bei denen die Messung einer Dehnung der primäre Zweck der Messung ist, kann mit einem Dehnungsmeßstreifen über die Dehnung auch eine Kraft gemessen werden. Begrenzte Wechsellast- und Überlastfestigkeit, sowie umständliche Applikationsverfahren, beschränken jedoch den Einsatz dieser Dehnungsmeßstreifen, insbesondere im Feldeinsatz des Anlagen- und Maschinenbaues.

Der im Anspruch 1 angegebenen Erfindung liegt das Problem zugrunde, die industrielle Kraft- oder Dehnungsmessung wesentlich zu verbessern und in ihrem Anwendungsbereich gegenüber den bekannten Dehnungsmeßstreifen deutlich zu erweitern.

Im Vergleich zu den Dehnungsmeßstreifen ergeben sich mit dem erfindungsgemäßen Kraft- oder Dehnungssensor insbesondere folgende Vorteile:

- deutlich höhere Überlastsicherheit

- wesentlich verbesserte Wechsellastfestigkeit
- frequenzbasiertes Meßsignal
- deutlich verbesserte Linearität und Nullpunktstabilität
- deutlich verringerter Temperaturgang und Hysterese
- einfache Applikation, weitgehend unabhängig von dem Ausdehnungskoeffizienten des Trägermaterials
- kostengünstiger Aufbau durch Mikrosystemtechnik.

Aufgrund obiger Vorteile wird der erfindungsgemäße Kraft- oder Dehnungssensor die bekannten Dehnungsmeßstreifen in vielen Bereichen ablösen, sowie neue Anwendungen, wie z.B. in der Anlagentechnik oder der Automobiltechnik, eröffnen.

Der Erfindung liegt die Erkenntnis zugrunde, daß bei einer Lage der Befestigungspunkte der Elektrodenstrukturen auf einer parallel zur Richtung der Elektroden verlaufenden Verbindungslinie und einer Orientierung dieser Verbindungslinie zur Richtung der zu messenden Kraft oder der zu messenden Dehnung unter einem Winkel von 40 bis 50° eine temperaturbedingte Dehnung der Elektrodenabstände zumindest weitgehend verhindert wird. Bei einer Orientierung der Verbindungslinie zur Richtung der zu messenden Kraft oder der zu messenden Dehnung unter einem Winkel von genau 45° gemäß Anspruch 2, wird der Elektrodenabstand als eigentliche Meßgröße von der Temperatur grundsätzlich nicht beeinflußt. Bei dieser Anordnung verändert die temperaturbedingte Dehnung die Kapazität des Meßkondensators über die Flächenänderung nur zu einem äußerst geringem Maß. Dieser Einfluß über die Flächenänderung kann jedoch durch die Elektrodenform gemäß Anspruch 3 praktisch vollständig vermieden werden.

Ein Ausführungsbeispiel der Erfindung ist in der Zeichnung dargestellt und wird im folgenden näher beschrieben. Es zeigen

Fig. 1 einen Kraft- oder Dehnungssensor mit einem durch einen Meßkondensator gebildeten kapazitiven Wandler und

Fig. 2 eine spezielle Elektrodenform des Meßkondensators.

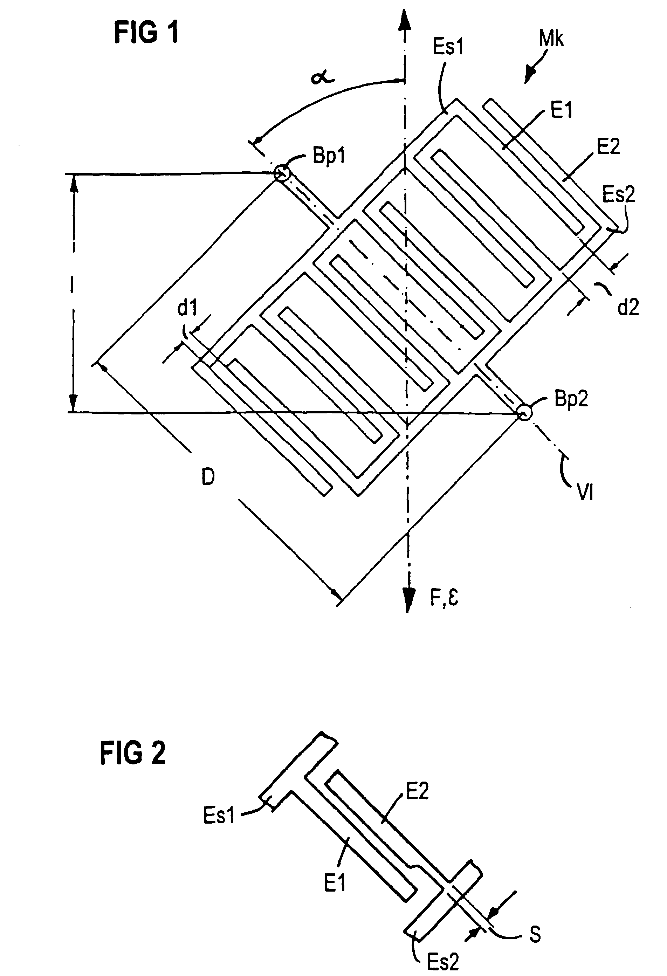

Die Figur 1 zeigt in stark vereinfachter schematischer Darstellung einen Kraft- oder Dehnungssensor mit einem durch einen Meßkondensator Mk gebildeten kapazitiven Wandler. Der Meßkondensator Mk wird durch zwei kammförmige Elektrodenstrukturen Es1 und Es2 gebildet, deren Elektroden E1 und E2 so angeordnet sind, daß jeweils ein kleiner Elektrodenabstand d1 und ein wesentlich größerer Elektrodenabstand d2 aufeinanderfolgen. Dementsprechend sind über Elektrodenpaare mit dem Abstand d2 gebildete Kapazitäten vernachlässigbar gering gegenüber den über die Abstände d1 der Elektrodenpaare gebildeten Kapazitäten. Die Gesamtkapazität des Meßkondensators Mk ergibt sich somit durch Parallelschaltung der Elektrodenpaare mit dem Elektrodenabstand d1.

Die beiden kammförmig ausgebildeten und ineinandergreifenden Elektrodenstrukturen Es1 und Es2 sind über zwei mit dem Quersteg des Kammes verbundene Befestigungspunkte Bp1 und Bp2 in Abhängigkeit der zu messenden Kraft F oder der zu messenden Dehnung $\varepsilon$ parallel zueinander verstellbar. Die Befestigungspunkte Bp1 und Bp2 sind beispielsweise elektrisch isoliert mit einem in der Zeichnung nicht näher dargestellten Träger verbunden, welcher seinerseits beispielsweise mit Hilfe von Schrauben, an dem ebenfalls nicht dargestellten Meßobjekt angebracht wird. Eine Anbringung der Befestigungspunkte Bp1 und Bp2 direkt am Meßobjekt ist ebenfalls möglich. Die elektrisch isolierte Befestigung erfolgt beispielsweise mit Hilfe von beidseitig metallisierten Keramikplättchen, die mit den Befestigungspunkten Bp1 bzw. Bp2 und dem Träger durch Löten verbunden werden.

Die beiden Befestigungspunkte Bp1 und Bp2 liegen auf einer parallel zur Richtung der Elektroden E1 und E2 verlaufenden Verbindungslinie V1, welche ihrerseits unter einem Winkel $\alpha$ zu der zu messenden Kraft F oder der zu messenden Dehnung $\varepsilon$ orientiert ist.

Sind nun der auf der Verbindungslinie V1 liegende Abstand zwischen den Befestigungspunkten Bp1 und Bp2 mit D und der in Richtung der zu messenden Kraft F oder der messenden Dehnung $\varepsilon$ ermittelte Abstand zwischen den Befestigungspunkten Bp1 und Bp2 mit 1 bezeichnet, so gilt die Beziehung

$$1 = D \cdot \cos\alpha$$

Ändert sich der Abstand 1 durch die Wirkung der Kraft F um den Betrag $\Delta 1$, so gilt für die Dehnung $\varepsilon = \Delta 1/1$. Die Längenänderung $\Delta 1$ bewirkt andererseits eine Änderung des Elektrodenabstandes d1 von

$$\Delta d1 = \Delta l \cdot \sin\alpha$$

Für die Änderung $\Delta d1$ des Elektrodenabstandes dl gilt somit die Beziehung

$$\Delta d1 = 1/2\varepsilon \cdot D \cdot \sin 2\alpha$$

Ein Maximum der durch die Kraft F hervorgerufenen Änderung des Elektrodenabstandes dl ergibt sich dann bei einem Winkel $\alpha = 45°$ zu

$$\Delta d1_{max} = 1/2\varepsilon \cdot D$$

Die vorstehend geschilderte Änderung $\Delta d1$ des Elektrodenabstandes dl verursacht eine Änderung der Gesamtkapazität des Meßkondensators Mk, wobei diese Kapazitätsänderung ein Maß für die zu messende Kraft oder die zu messende Dehnung $\varepsilon$ ist.

Im Hinblick auf eine Verfälschung des Meßergebnisses durch Temperatureinflüsse ist es nun ohne weiteres ersichtlich, daß bei einem Winkel $\alpha = 45°$ temperaturbedingte Dehnungen den Elektrodenabstand d1 als Meßgröße grundsätzlich nicht beeinflussen. Die temperaturbedingte Dehnung beeinflußt lediglich in einem äußerst geringen Maß die Kapazität des Meßkondensators Mk über eine Flächenänderung der Elektrodenpaare.

Ein Einfluß der temperaturbedingten Flächenänderung auf die Kapazität des Meßkondensators Mk kann durch die in Figur 2 dargestellte Elektrodenform praktisch vollständig vermieden werden. Bei dieser speziellen Elektrodenform weist jeweils eine Elektrode E2 eines Elektrodenpaares E1, E2 im äußeren Überlappungsbereich eine geringere Stärke S auf, als der übrige, kapazitive wirksame Bereich. Temperaturbedingte Flächenänderungen wirken sich dann nur auf den Überlappungsbereich mit der reduzierten Stärke S aus, der durch den hier entsprechend vergrößerten Abstand der Elektrodenpaare E1, E2 auf die Kapazität des Meßkompensators Mk praktisch keinen Einfluß mehr hat.

## Patentansprüche

1. Kraft- oder Dehnungssensor mit kapazitivem Wandler, mit folgenden Merkmalen:

- die elektrisch voneinander isolierten, kammförmig ausgebildeten und ineinandergreifenden Elektrodenstrukturen (Es1,Es2) eines Meßkondensators (Mk) sind über zwei Befestigungspunkte (Bp1,Bp2) in Abhängigkeit der zu messenden Kraft (F) oder zu messenden Dehnung ($\varepsilon$) parallel zueinander verstellbar,

- die Gesamtkapazität des Meßkondensators (Mk) ist durch Parallelschaltung einzelner Elektrodenpaare bestimmt, die jeweils durch eine Elektrode (E1) der einen Elektrodenstruktur (Es1) und eine zugeordnete, benachbarte Elektrode (E2) der zweiten Elektrodenstruktur (Es2) gebildet sind,

- der entsprechend der zu messenden Kraft (F) oder der zu messenden Dehnung ($\varepsilon$) variable Elektrodenabstand (d1) der Elektrodenpaare ist innerhalb des gesamten Meßbereichs klein gegeüber dem Abstand (d2) zwischen einander nicht zugeordneten, benachbarten Elektroden (E1,E2) der beiden Elektrodenstrukturen (Es1,Es2),

- die Befestigungspunkte (Bp1,Bp2) der Elektrodenstrukturen (Es1,Es2) liegen auf einer parallel zur Richtung der Elektroden (E1,E2) verlaufenden Verbindungslinie (V1), die unter einem Winkel (α) von 40 bis 50° zur Richtung der zu messenden Kraft (F) oder der zu messenden Dehnung (ε) orientiert ist.

2. Kraft- oder Dehnungssensor nach Anspruch 1, **dadurch gekennzeichnet,** daß die Verbindungslinie (V1) unter einem Winkel (a) von 45° zur Richtung der zu messenden Kraft (F) oder der zu messenden Dehnung (ε) orientiert ist.

3. Kraft- oder Dehnungssensor nach Anspruch 1 oder 2, **dadurch gekennzeichnet,** daß zumindest jeweils eine Elektrode (E2) der Elektrodenpaare (E1, E2) des Meßkondensators (Mk) im äußeren Überlappungsbereich eine geringere Stärke (S) aufweist.

## Claims

1. Force or extension sensor with capacitive transducer, having the following features:

   - the comb-like, interlocking electrode structures (Es1, Es2), which are electrically insulated from one another, of a measuring capacitor (Mk) can be adjusted in parallel with one another by means of two attachment points (Bp1, Bp2) as a function of the force (F) or extension (e) to be measured,
   - the total capacitance of the measuring capacitor (Mk) is determined by the parallel circuit comprising individual electrode pairs which are each formed by an electrode (E1) of one (Es1) of the electrode structures, and an associated, adjacent electrode (E2) of the second electrode structure (Es2),
   - the electrode spacing (d1), which can vary in accordance with the force (F) or the extension (ε) to be measured, of the electrode pairs is, within the entire measuring range, small in comparison with the distance (d2) between adjacent electrodes (E1, E2), which are not associated with one another, of the two electrode structures (Es1, Es2),
   - the attachment points (Bp1, Bp2) of the electrode structures (Es1, Es2) lie on a junction line (V1) which runs parallel to the direction of the electrodes (E1, E2) and which is oriented at an angle (α) of 40 to 50° with respect to the direction of the force (F) or the extension (ε) to be measured.

2. Force or extension sensor according to Claim 1, characterized in that the junction line (V1) is oriented at an angle (α) of 45° with respect to the direction of the force (F) or the extension (ε) to be measured.

3. Force or extension sensor according to Claim 1 or 2, characterized in that in each case at least one electrode (E2) of the electrode pairs (E1, E2) of the measuring capacitor (Mk) has a smaller thickness (S) in the outer overlapping area.

## Revendications

1. Capteur de force ou d'allongement avec transducteur capacitif, présentant les caractéristiques suivantes:

   - les structures d'électrode (Es1, Es2) isolées électriquement l'une de l'autre, en forme de peigne et s'égrenant l'une dans l'autre d'un condensateur de mesure (Mk) sont réglables parallèlement l'une à l'autre à l'aide de deux points de fixation (Bp1, Bp2) en fonction de la force (F) ou de l'allongement (ε) à mesurer.
   - la capacité totale du condensateur de mesure (Mk) est déterminée par le montage en parallèle de paires d'électrodes individuelles, formées chacune par une électrode (E1) de l'une des structures d'électrode (Es1) et par une électrode voisine assortie (E2) de la seconde structure d'électrode (Es2),
   - l'écartement des électrodes (d1) des paires d'électrodes variable conformément à la force (F) ou à l'allongement (ε) à mesurer, est faible à l'intérieur de la plage de mesure complète vis-à-vis de l'écartement (d2) entre des électrodes voisines (E1, E2) non assorties l'une à l'autre des deux structures d'électrode (Es1, Es2),
   - les points de fixation (Bp1, Bp2) des structures d'électrode (Es1, Es2) se trouvent sur une ligne de raccordement (V1) parallèle à la direction des électrodes (E1, E2), orientée sous un angle (α) de 40 à 50° dans la direction de la force (F) ou de l'allongement (ε) à mesurer.

2. Capteur de force ou d'allongement selon la revendication 1, caractérisé en ce que, la ligne de raccordement (V1) est orientée sous un angle (α) de 45° dans la direction de la force (F) ou de l'allongement (ε) à mesurer.

3. Capteur de force ou d'allongement selon la revendication 1 ou 2, caractérisé en ce que, au moins une électrode (E2) de la paire d'électrodes (E1, E2) du condensateur de mesure (Mk) affiche une puissance inférieure (S) dans la zone de che-

**EP 0 776 466 B1**

vauchement extérieure.

**FIG 1**

**FIG 2**